# EUROPEAN PATENT APPLICATION

(11) **EP 4 137 526 A1**
(43) Date of publication of application: **22.02.2023**
(21) Application number: 22183287.6
(22) Date of filing: 06.07.2022
(51) Int. Cl.: C08G 59/22, C08G 59/28, C08G 59/50, C08K 7/24, C08K 7/26, C08K 7/18, C08K 3/22, C08K 5/17, C08L 63/00

(54) **THERMALLY CONDUCTIVE RESIN COMPOSITION**

(30) Priority: 17.08.2021 JP 2021132801; 28.06.2022 JP 2022103499
(71) Applicant: ThreeBond Co., Ltd., Tokyo 192-0398 (JP)
(72) Inventor: HANOCHI, Haruka, Tokyo, 192-0398 (JP); KUWAHARA, Yusuke, Tokyo, 192-0398 (JP)
(74) Representative: Petty, Catrin Helen

(57) **Abstract**

An object of the present invention is to provide a thermally conductive resin composition having both high thermal conductivity and low specific gravity.

A thermally conductive resin composition comprising the following (A) to (D) components:
(A) component: an epoxy resin,
(B) component: a latent curing agent,
(C) component: hollow inorganic powder, and
(D) component: non-hollow inorganic powder,
wherein a cured product thereof has a specific gravity of 1.50 or less and a thermal conductivity of 0.23 W/ (m·K) or higher.

## Description

### CROSS-REFERENCE TO RELATED APPLICATION

The present application is based on Japanese Patent Application No. 2021-132801 filed on August 17, 2021, and Japanese Patent Application No. 2022-103499 filed on June 28, 2022, the disclosed content of which are incorporated herein by reference in their entirety.

### TECHNICAL FIELD

The present invention relates to a thermally conductive resin composition having both high thermal conductivity and low specific gravity.

### BACKGROUND ART

In recent years, thermally conductive resin compositions have been used between heat generating bodies of electrical and electronic components such as semiconductors and heat dissipating members such as heat dissipating fins for the purpose of dissipating heat generated from electrical and electronic components to the outside. Specifically, since the thermally conductive resin compositions can have both adhesion and thermal conductivity as disclosed in Japanese Patent Laid-Open No. 2012-211304, they include epoxy resin-based thermally conductive resins, etc.

### SUMMARY OF INVENTION

In recent years, thermally conductive resin compositions have been used in the vicinity of batteries, power devices, and lighting mounted in electric vehicles, and weight saving has been required from the viewpoint of improving fuel consumption. However, the thermally conductive resin compositions are in general highly filled with alumina or boron nitride to achieve high thermal conductivity, which tends to result in high specific gravity. Therefore, it has been difficult to achieve both high thermal conductivity and low specific gravity.

An object of the present invention is to provide a thermally conductive resin composition that have both high thermal conductivity and low specific gravity.

### SUMMARY OF INVENTION

Next, the gist of the present invention will be described below. The present invention overcomes the aforementioned conventional problems.
[1] A thermally conductive resin composition comprising the following (A) to (D) components:
   (A) component: an epoxy resin,
   (B) component: a latent curing agent,
   (C) component: hollow inorganic powder, and
   (D) component: non-hollow inorganic powder,
   wherein a cured product thereof has a specific gravity of 1.50 or less and a thermal conductivity of 0.23 W/ (m·K) or higher.
[2] The thermally conductive resin composition according to [1], comprising 3 to 55 parts by mass of the (C) component and 35 to 200 parts by mass of the (D) component, relative to 100 parts by mass of the (A) component.
[3] The thermally conductive resin composition according to [1] or [2], wherein the (C) component is silica-alumina.
[4] The thermally conductive resin composition according to any one of [1] to [3], wherein the (C) component has an apparent density of 0.2 to 2.5 g/cm³.
[5] The thermally conductive resin composition according to any one of [1] to [4], wherein the (A) component comprises a glycidyl amine-type epoxy resin.
[6] The thermally conductive resin composition according to any one of [1] to [5], wherein the (A) component comprises a bisphenol A-type epoxy resin and a bisphenol F-type epoxy resin.
[7] The thermally conductive resin composition according to any one of [1] to [6], wherein the (B) component is an adduct-type latent curing agent.
[8] The thermally conductive resin composition according to any one of [1] to [7], wherein the (B) component is an epoxy amine adduct-type latent curing agent.
[9] A cured product obtained by curing the thermally conductive resin composition according to any one of [1] to [8].

### Effect of the Invention

The thermally conductive resin composition of the present invention has both high thermal conductivity and low specific gravity.

### DESCRIPTION OF EMBODIMENTS

Hereinbelow, the present invention will be described in detail. In the present description, "X to Y" is used in the meaning that the numerical values listed before and after thereof (X and Y) are included as the lower limits and upper limits and refers to "X or more and Y or less". Moreover, in the present description, unless otherwise specified, operation and measurement of physical properties, etc., are conducted at room temperature (20°C or higher and 25°C or lower)/relative humidity of 40% RH or higher and 50% RH or lower.

### <(A) Component>

The epoxy resin that is the (A) component of the present invention, can be used without limitation as long as it is a compound having two or more glycidyl groups in a molecule. Examples of (A) component include a glycidyl amine-type epoxy resin, an epoxy resin without glycidyl amine, etc., among which the glycidyl amine-type epoxy resin is preferred. Moreover, combined use of the glycidyl amine-type epoxy resin and the epoxy resin without glycidyl amine enables to obtain a thermally conductive resin composition that further has both higher thermal conductivity and lower specific gravity.

The glycidyl amine-type epoxy resin is an epoxy resin having one or more glycidyl groups bonded directly to the nitrogen atom, i.e., an amine-type epoxy resin having one or more glycidyl groups in one molecule. It is not particularly limited, in one embodiment, glycidyl amine-type epoxy resin preferably has two or more glycidyl groups per epoxy resin molecule, and more preferably has two glycidyl groups per epoxy resin molecule. The glycidyl amine-type epoxy resin includes, for example, a compound having the following structure:

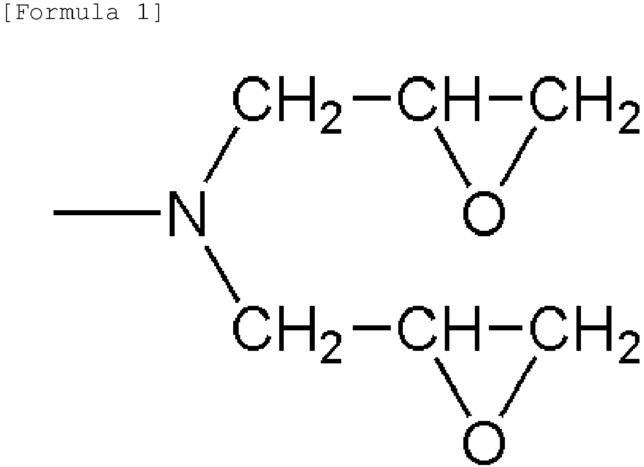

The glycidyl amine-type epoxy resin is not particularly limited, and includes, for example, diglycidyl-o-toluidine, diglycidylaniline, diaminodiphenylmethane tetraglycidyl ether, N,N-bis(2,3-epoxypropyl)-4-(2,3-epoxypropoxy)aniline, etc., and among them, the diglycidyl-o-toluidine and the diglycidylaniline are preferred. Commercially available products include GOT and GAN (manufactured by Nippon Kayaku Co. Ltd.), jER604 and jER 630 (manufactured by Mitsubishi Chemical Corporation), Sumiepoxy ELM-434 and Sumiepoxy ELM-100 (manufactured by Sumitomo Chemical Co. Ltd.), YH-404, YH-513, and YH-523 (manufactured by NIPPON STEEL Chemical & Material Co., Ltd.), etc. These glycidyl amine-type epoxy resins may be used alone, or two or more types may be used in combination.

An epoxy equivalent of the glycidyl amine-type epoxy resin is not particularly limited, and is, for example, 50 to 250 g/eq, more preferably 100 to 200 g/eq, still more preferably 105 to 180 g/eq, particularly preferably 110 to 170 g/eq, and most preferably 120 to 150 g/eq. When the epoxy equivalent of the glycidyl amine-type epoxy resin is in the above range, the desired effect of the present invention is further demonstrated. Here, the epoxy equivalent is a value measured in compliance with JIS K7236:2001.

The epoxy resin without glycidyl amine includes, for example, a bisphenol A-type epoxy resin, a bisphenol F-type epoxy resin, a bisphenol E-type epoxy resin, diglycidyl ether of a bisphenol A-type alkylene oxide adduct, diglycidyl ether of a bisphenol F-type alkylene oxide adduct, diglycidyl ether of a bisphenol E-type alkylene oxide adduct, a hydrogenated bisphenol A-type epoxy resin, a hydrogenated bisphenol F-type epoxy resin, a hydrogenated bisphenol E-type epoxy resin, a cresol novolac-type epoxy resin, a phenol novolac-type epoxy resin, a hydrogenated cresol novolac-type epoxy resin, a hydrogenated phenol novolac-type epoxy resin, resorcinol diglycidyl ether, an alicyclic epoxy resin, an aliphatic epoxy resin, etc. Among them, from the viewpoint of obtaining a thermally conductive resin composition with excellent thermal conductivity, the bisphenol A-type epoxy resin and the bisphenol F-type epoxy resin are preferably used, and the bisphenol A-type epoxy resin is particularly preferably combined with the bisphenol F-type epoxy resin for use. These bisphenol A-type epoxy resin and the bisphenol F-type epoxy resin may be used alone, or two or more types may be used in combination.

The epoxy equivalent of the epoxy resin without glycidyl amine is not particularly limited, and is, for example, 70 to 300 g/eq, more preferably 110 to 200 g/eq, still more preferably 120 to 195 g/eq, particularly preferably 135 to 190 g/eq, and most preferably more than 150 g/eq and 180 g/eq or less. When the epoxy equivalent of the epoxy resin without glycidyl amine is in the above range, the desired effect of the present invention is further demonstrated. Here, the epoxy equivalent is a value determined in compliance with JIS K7236:2001.

When the glycidyl amine-type epoxy resin and the epoxy resin without glycidyl amine are combined for use, the epoxy equivalent of the glycidyl amine-type epoxy resin is preferably lower than that of the epoxy resin without glycidyl amine. For example, the epoxy equivalent of the glycidyl amine-type epoxy resin is preferably 10 to 50 g/eq lower, more preferably 15 to 45 g/eq lower, still more preferably 18 to 40 g/eq lower, and particularly preferably 20 to 35 g/eq lower, than the epoxy equivalent of the epoxy resin without glycidyl amine. When the epoxy equivalents of glycidyl amine epoxy resin and epoxy resin without glycidyl amine are in the above relationship, the desired effects of the present invention are further demonstrated.

The commercially available epoxy resin without glycidyl amine includes, for example, jER825, 827, 828, 828EL, 828US, 828XA, 834, 806, 806H, and 807 (manufactured by Mitsubishi Chemical Corporation), EPICLON 840, 840-S, 850, 850-S, 850-LC, EXA-850 CRP, 830, 830-S, 835, EXA-830LVP, EXA -850CRP, and EXA-835LV (manufactured by DIC Corporation), EP4100, EP4000, EP4080, EP4085, EP4088, EP4100HF, EP4901HF, EP4000S, EP4000L, EP4003S, EP4010S, and EP4010L (manufactured by ADEKA CORPORATION), etc., but are not limited thereto. They can be used each singly, or in combination of two or more.

When the glycidyl amine-type epoxy resin and the epoxy resin without glycidyl amine are combined for use, a ratio of parts by mass of the glycidyl amine-type epoxy resin and the epoxy resin without glycidyl amine is preferably 1:99 to 99:1, more preferably 5:95 to 95:5, still more preferably 10:90 to 90:10, particularly preferably 10:90 to 50:50, and most preferably 10:90 to 40:60. In one embodiment, the ratio of parts by mass of the glycidyl amine-type epoxy resin and the epoxy resin without glycidyl amine is 10:90 to 30:70. The ratio of parts by mass within the above range can provide a thermally conductive resin composition having both higher thermal conductivity and lower specific gravity.

The (A) component may be composed of one component or a mixture of a plurality of components. When the (A) component is composed of the plurality of components, the content of (A) component is the total amount of the plurality of components. In the present invention, the content of the (A) component is preferably 20 to 70 parts by mass, more preferably 25 to 70 parts by mass, still more preferably 30 to 65 parts by mass, particularly preferably 35 to 60 parts by mass, most preferably 38 to 55 parts by mass, relative to total mass of the thermally conductive resin composition.

### <(B) component>

The (B) component used in the present invention is a latent curing agent, acts as a curing agent, and plays a roll of curing the (A) component. The (B) component includes, for example, an adduct-type latent curing agent. Here, the adduct-type latent curing agent includes a compound in which an epoxy resin and an amine compound were reacted up to the intermediate stage (epoxy amine adduct-type latent curing agent). Further, an average particle size of the (B) component is not particularly limited, and is, for example, 0.1 to 30.0 µm, more preferably 1.0 to 20.0 µm, still more preferably 2.0 to 15.0 µm, furthermore preferably 2.5 to 12.0 µm, and particularly preferably 3.0 to 10.0 µm, and most preferably 5.0 to 9.0 µm. The average particle size of the (B) component being within the above range can provide a thermally conductive resin composition having both higher thermal conductivity and lower specific gravity. The average particle size is a particle diameter (D50) at a cumulative volume ratio of 50% in the particle size distribution obtained by a laser diffraction scattering method.

The commercially available product of (B) component is not particularly limited, and includes for example, as the epoxy amine adduct-type latent curing agent, Fujicure (registered trademark, hereinafter the same applies.) FXE-1000, FXR-1020, FXR-1030, and FXB-1050 (the above products are manufactured by T&K TOKA Co., Ltd.), Amicure (registered trademark, hereinafter the same applies.) PN-23, Amicure PN-H, Amicure PN-31 Amicure PN-40, Amicure PN-50, Amicure PN-F, Amicure PN-23J, Amicure PN-31J, Amicure PN-40J, Amicure MY-24, Amicure MY-25, Amicure MY-R, and Amicure PN-R (the above products are manufactured by Ajinomoto Fine Techno Co., Ltd.), etc. They may be used alone or in mixture.

A content of (B) component is preferably 5 to 50 parts by mass, more preferably 10 to 40 parts by mass, still more preferably 15 to 30 parts by mass, particularly preferably 18 to 28 parts by mass, and most preferably 20 to 27 parts by mass, relative to 100 parts by mass of the (A) component. The content within the above range can provide a thermally conductive resin composition having both higher thermal conductivity and lower specific gravity.

### <(C) Component>

The hollow inorganic powder that is the (C) component of the present invention, is a filler with a hollow structure and is also called a microballoon. By using the (C) component in combination with the (D) component described below, a thermally conductive resin composition having both high thermal conductivity and low specific gravity can be obtained. The component of the (C) component is not particularly limited, and includes, for example, alumina, silica-alumina, borosilicate glass, etc. The silica-alumina is a composite of silica and alumina, such as zeolite. The (C) component is silica-alumina in one embodiment of the thermally conductive resin composition of the present invention.

The apparent density of the (C) component is not particularly limited, and is, for example, 0.1 to 2.5 g/cm³, preferably 0.2 to 2.5 g/cm³, more preferably 0.2 to 2.0 g/cm³, still more preferably 0.3 to 2.0 g/cm³, and particularly preferably 0.4 to 1.5 g/cm³. In one embodiment, the apparent density of the (C) component is 0.5 to 1.2 g/cm³, 0.5 to 1.0 g/cm³, and 0.6 to 1.0 g/cm³, in this order. The above apparent density is a value measured by using a density measurement apparatus ULTRAPYC1200e manufactured by QuantaChrome Instruments. When the apparent density of the (C) component is within the above range, a thermally conductive resin composition having both higher thermal conductivity and lower specific gravity can be obtained.

From the viewpoint of obtaining a thermally conductive resin composition having both high thermal conductivity and low specific gravity, the average particle size of the (C) component is preferably 0.01 µm or larger and smaller than 100 µm, more preferably 1 µm or larger and 70 µm or smaller, particularly preferably 1 µm or larger and 50 µm or smaller, and most preferably 10 µm or larger and 45 µm or smaller. The average particle size is a particle diameter (D50) at 50% cumulative volume ratio in the particle size distribution obtained by the laser diffraction scattering method.

The commercially available product of the (C) component is not particularly limited, and includes, for example, Kainospheres 75, 100, 150, 300, 500 (manufactured by Kansai Matec Co., Ltd.), etc.

An content of the (C) component is not particularly limited, and is preferably, for example, 3 to 55 parts by mass of the (C) component, more preferably 5 to 50 parts by mass, still more preferably 7 to 47 parts by mass, particularly preferably 8 to 40 parts by mass, and most preferably 9 to 35 parts by mass, relative to 100 parts by mass of the (A) component. The content within the above range provides a thermally conductive resin composition having both higher thermal conductivity and lower specific gravity. The thermally conductive resin composition of the present invention, in one embodiment, comprises 3 to 55 parts by mass of the (C) component and 35 to 200 parts by mass of the (D) component, relative to 100 parts by mass of the (A) component.

### <(D) component>

The (D) component of the present invention is non-hollow inorganic powder. When the (D) component is used in combination with the aforementioned (C) component, a thermally conductive resin composition having both high thermal conductivity and low specific gravity can be obtained. The (D) component is preferably at least one selected from the group consisting of alumina, zinc oxide, and aluminum nitride, more preferably at least one each independently selected from the group consisting of alumina and aluminum nitride because of excellent thermal conductivity thereof, and particularly preferably alumina. In addition, they may be used singly or in admixture thereof.

From the viewpoint of obtaining a thermally conductive resin composition having both high thermal conductivity and low specific gravity, the average particle size of the (D) component is preferably 0.01 µm or larger and smaller than 85 µm, more preferably 0.1 µm or larger and 70 µm or smaller, still more preferably 0.2 µm or larger and 50 µm or smaller, particularly preferably 0.5 µm or larger and 30 µm or smaller, and most preferably 1 µm or larger and 10 µm or smaller. The average particle size is a particle diameter (D50) at the 50% cumulative volume ratio in the particle size distribution obtained by the laser diffraction scattering method. A density of the (D) component is not particularly limited, and is preferably, for example, higher than 2.5 g/cm³, more preferably higher than 2.5 g/cm³ and 10 g/cm³ or lower, still more preferably 3.0 g/cm³ or higher and 8.0 g/cm³ or lower, particularly preferably 3.2 g/cm³ or higher and 6.0 g/cm³ or lower, and most preferably 3.5 g/cm³ or higher and 5.0 g/cm³ or lower. The density of the (D) component is, in one embodiment, within the range of higher than 2.5 g/cm³ and 7 g/cm³ or lower. The above density is a value measured by using an ULTRAPYC manufactured by QuantaChrome Instruments. When the density of the (D) component is within the above range, a thermally conductive resin composition having both higher thermal conductivity and lower specific gravity can be obtained.

A shape of the (D) component is not particularly limited, and includes, for example, a spherical shape or an undefined shape, with the spherical shape being preferred. The "spherical" as used herein includes not only a perfectly spherical shape, but also substantially spherical, oval, and the like. More specifically, the "spherical" refers to having an average circularity of 0.4 or more. The "undefined shape" as used herein refers to shapes with angles other than the spherical shape (for example, needle-like, fibrous, scaly, dendritic, platy, crushed shapes, etc.). More specifically, the "undefined shape" refers to a shape with an average circularity of less than 0.4. Furthermore, when the (D) component is a mixture containing spherical thermally conductive powder and undefined shaped thermally conductive powder, a cured product with more improved thermal conductivity can be obtained.

A commercially available product of the (D) component is not particularly limited, and can be obtained, for example, from Showa Denko K.K., Nippon Light Metal Co., Ltd., NIPPON STEEL & SUMIKIN Chemical & Material Co., Ltd., Denka Company Limited, etc.

An content of the (D) component is not particularly limited, and is preferably, for example, 35 to 200 parts by mass of the (D) component, more preferably 38 to 100 parts by mass, still more preferably 40 to 90 parts by mass, particularly preferably from 42 to 88 parts by mass, particularly preferably from 45 to 85 parts by mass, and most preferably 55 to 83 parts by mass, relative to 100 parts by mass of the (A) component. The content within the above range provides a thermally conductive resin composition having both higher thermal conductivity and lower specific gravity.

### <Specific gravity of cured product>

The thermally conductive resin composition of the present invention is characterized in that the specific gravity of the cured product is 1.50 or less. It is more preferably 1.40 or less and particularly preferably 1.30 or less. The specific gravity of the present invention is obtained by measuring a specific gravity in compliance with JIS K 0061 (2001) by using a water displacement method. In order to allow the thermally conductive resin composition to have a specific gravity within the above range, a method thereof is not particularly limited, and the range can be controlled, for example, by combining the (C) component and the (D) component of the present invention, and more preferably by combining the (C) component and the (D) component of the present invention in a specified mass proportion. Specifically, the specified proportion includes 3 to 55 parts by mass of the (C) component and 35 to 200 parts by mass of the (D) component, relative to 100 parts by mass of the aforementioned (A) component.

### <Thermal conductivity of cured product>

The thermally conductive resin composition of the present invention is characterized in that the thermal conductivity of the cured product (25°C) is 0.23 W/(m·K) or higher. The thermal conductivity of the cured product (25°C) is preferably higher than 0.23 W/ (m·K) , more preferably 0.24 W/(m·K) or higher, and particularly preferably 0.25 W/ (m·K) or higher. The higher the thermal conductivity of the cured product, the more heat transfer is facilitated, which is preferred. Comparison of the case where the lower limit described above is satisfied and the case where it is not satisfied indicates that there is a significant difference in the performance of dissipating heat generated from electrical and electronic components to the outside. The thermal conductivity of the present invention (25°C) is determined by measuring thermal conductivity of a cured surface of a test specimen (60 × 125 mm) at 25°C, using a thermal conductometer (QTM-D3 manufactured by Kyoto Electronics Industry Co. Ltd., non-steady-state method). Specifically, it is measured by the method described in the Examples.

One aspect of the present invention relates to the thermally conductive resin composition containing (A) to (D) components, wherein a cured product thereof has a specific gravity of 1.50 or less and a thermal conductivity (25°C) of 0.23 W/ (m·K) . This allows the thermally conductive resin composition to have both high thermal conductivity and low specific gravity.

Another aspect of the present invention relates to a thermally conductive resin composition containing (A) to (D) components which are an epoxy resin as (A) component, a latent curing agent as (B) component, hollow inorganic powder as (C) component, and non-hollow inorganic powder as (D) component, wherein the (C) component is silica-alumina and the (C) component is contained in an amount of 3 to 55% parts by mass relative to 100 parts by mass of the (A) component, thereby allowing the thermally conductive resin composition to achieve both high thermal conductivity and low specific gravity. In this aspect, as one embodiment, the (C) component has an apparent density of 0.2 to 2.5 g/cm³. Also, in this aspect, as one embodiment, the (D) component is contained in an amount of 35 to 200 parts by mass. In this aspect, as one embodiment, the (A) component contains a glycidyl amine-type epoxy resin. In this aspect, as one embodiment, the (A) component contains a bisphenol A-type epoxy resin and a bisphenol F-type epoxy resin. In this aspect, as one embodiment, the (B) component is an adduct-type latent curing agent. In this aspect, as one embodiment, the (B) component is an epoxy amine adduct-type latent curing agent. In this aspect, one embodiment is a cured product obtained by curing the thermally conductive resin composition of any of the above embodiments.

Further another aspect of the present invention relates to a thermally conductive resin composition containing (A) to (D) components which are an epoxy resin as (A) component, a latent curing agent as (B) component, hollow inorganic powder as (C) component and non-hollow inorganic powder as (D) component, wherein the (C) component has an apparent density of 0.2 to 2.5 g/cm³ and the (C) component is contained in an amount of 3 to 55% parts by mass relative to 100 parts by mass of the (A) component, thereby allowing the thermally conductive resin composition to achieve both high thermal conductivity and low specific gravity. In this aspect, as one embodiment, the (C) component is silica-alumina. Moreover, in this aspect, as one embodiment, the (D) component is contained in an amount of 35 to 200 parts by mass. In this aspect, as one embodiment, the (A) component contains a glycidyl amine-type epoxy resin. In this aspect, as one embodiment, the (A) component contains a bisphenol A-type epoxy resin and a bisphenol F-type epoxy resin. In this aspect, as one embodiment, the (B) component is an adduct-type latent curing agent. In this aspect, as one embodiment, the (B) component is an epoxy amine adduct-type latent curing agent. In this aspect, one embodiment is a cured product obtained by curing the thermally conductive resin composition of any of the above embodiments.

### <Optional component>

For the present invention, to the extent that does not impair the purpose of the present invention, additives such as a borate ester, a silane coupling agent, any of various elastomers such as a styrene-based copolymer, a liquid curing agent, an antioxidant, a light stabilizer, a heavy metal inactivator, a tackifier, a plasticizer, an antifoaming agent, a dye, a pigment, a corrosion inhibitor, a leveling agent, a dispersant, a rheology modifying agent and a surfactant, etc., can be used.

The borate ester is a component that can provide both curability and storage stability when combined with the (A) to (D) components contained in the thermally conductive resin composition of the present invention. The borate ester is not particularly limited, and includes, for example, trimethyl borate, triethyl borate, tripropyl borate, tributyl borate, tripentyl borate, trihexyl borate, triheptyl borate, tri-n-octyl borate, tridecyl borate, trihexadecyl borate, trioctadecyl borate, 2,4,6-trimethoxyboroxine, triphenyl borate, tri-o-tolyl borate, 2-ethoxy-4,4,5,5-tetramethyl-1,3,2-dioxaborolane, 2-isopropoxy-4,4,5,5-tetramethyl-1,3,2-dioxaborolane, 2-isopropoxy-4,4,6-trimethyl-1,3,2-dioxaborinane, 2-methoxy-4,4,5,5-tetramethyl-1,3,2-dioxaborolane, 2,2'-oxybis(5,5'-dimethyl-1,3,2-oxabolinane), etc. Moreover, it may be a mixture of two or more types. A content of borate ester is not particularly limited, and is, for example, 0.01 to 20 parts by mass and more preferably 0.1 to 10 parts by mass, still more preferably 0.2 to 5 parts by mass, particularly preferably 0.3 to 3 parts by mass, most preferably 0.5 to 2 parts by mass, relative to 100 parts by mass of the (A) component.

The silane coupling agent includes, for example, alkyl group-containing silane coupling agents such as dimethyldimethoxysilane, methyltrimethoxysilane, methyltriethoxysilane, dimethyldiethoxysilane, and hexyltrimethoxysilane; vinyl group-containing silane coupling agents such as vinyltrimethoxysilane and vinyltriethoxysilane; phenyl group-containing silane coupling agents such as phenyltrimethoxysilane, diphenyldimethoxysilane, and phenyltriethoxysilane; and amino group-containing silane coupling agents such as N-2 -(aminoethyl)-3-aminopropyltrimethoxysilane, N-2-(aminoethyl)-3-aminopropylmethyldimethoxysilane, N-2-(aminoethyl)-3-aminopropylmethyltrimethoxysilane, N-2-(aminoethyl)-3-aminopropylmethyltriethoxysilane, 3-aminopropyltrimethoxysilane, 3-aminopropyltriethoxysilane, and N-phenyl-3-aminopropyltrimethoxysilane; glycidyl group-containing silane coupling agents such as 3-glycidoxypropylmethyldimethoxysilane, 3-glycidoxypropyltrimethoxysilane, and 3-glycidoxysilyl triethoxysilane, and (meth)acryloyl group-containing silane coupling agents such as 3-(meth)acryloxypropylmethyldimethoxysilane, 3-(meth)acryloxypropyltrimethoxysilane, 3-(meth)acryloxypropylmethyldiethoxysilane, 3-(meth)acryloxypropyltriethoxysilane; others including γ-mercaptopropyltrimethoxysilane, γ-chloropropyltrimethoxysilane, styrylsilane, ureidosilane, sulfidosilane, isocyanate silane, etc. Among them, the alkyl group-containing silane coupling agents, the phenyl group-containing silane coupling agents, the vinyl group-containing silane coupling agents, and the amino group-containing silane coupling agents are preferred. They may be used alone, or two or more types may be used in combination. Moreover, an addition amount of silane coupling agent is preferably in the range of 0.05 to 100 parts by mass, more preferably in the range of 0.1 to 50 parts by mass, and particularly preferably in the range of 1 to 30 parts by mass, relative to 100 parts by mass of the (A) component of the present invention.

A liquid curing agent may be added for the present invention. The liquid curing agent includes, for example, a polythiol compound.

### <Applications>

Since the thermally conductive resin composition of the present invention has both high thermal conductivity and low specific gravity, it is used in applications such as automotive parts, electrical and electronic components, and building materials. In addition, the thermally conductive resin composition in an aspect of the present invention can be used in applications such as heat dissipation of electronic circuit boards; heat dissipation of electronic devices such as cellular phones and personal computers; heat dissipation of lighting such as LED; heat dissipation of optical pickup modules; heat dissipation of camera modules; heat dissipation of sensing devices; heat dissipation of power semiconductors; heat dissipation of inverters mounted on automobiles; heat dissipation of converters mounted on automobiles; heat dissipation of batteries, etc. mounted on automobiles, and the like.

### <Heat dissipation method>

The heat dissipation method using the present invention includes a method for coating electrical and electronic components with the thermally conductive resin composition that is an aspect of the present invention and dissipating heat generated from the electrical and electronic components to the outside, etc. The aforementioned electrical and electronic components include electronic circuit boards; cellular phones; electronic devices such as personal computers; lighting devices such as LEDs; optical pickup modules; camera modules; sensing devices; power semiconductors; inverters; converters; ECU components, etc.

### Examples

The present invention will be described in greater detail with the following Examples. However, the present invention is not limited to the following Examples.

### <(A) component>

a1: An epoxy resin composition composed of 50% by mass of bisphenol A-type epoxy resin and 50% by mass of bisphenol F-type epoxy resin, having an epoxy equivalent of 165 g/eq (EXA-835LV manufactured by DIC Corporation)
a2: Diglycidyl-o-toluidine having an epoxy equivalent of 135 g/eq (GOT manufactured by Nippon Kayaku Co., Ltd.)

### <(B) component>

b1: An epoxy amine adduct-type latent curing agent with an average particle size of 7 µm (Fujicure FXR-1030 manufactured by T&K TOKA Co., Ltd.)

### <(C) component and comparative component>

c1: Hollow inorganic powder composed of silica-alumina, having an average particle size of 35 µm and an apparent density of 0.7 g/cm³ (Kainospheres 75 manufactured by Kansai Matec Co., Ltd.)
c'1: Hollow non-inorganic powder composed of glass, having an average particle size of 65 µm and an apparent density of 0.13 g/cm³ (Glass Bubbles K1 manufactured by 3M Company)

### <(D) component>

d1: Spherical alumina powder having an average particle size of 3 µm and a density of 3.7 g/cm³ (AX-3-32 manufactured by NIPPON STEEL & SUMIKIN Chemical & Material Co., Ltd).

### <Others>

Borate ester (L-07N manufactured by Shikoku Kasei Kogyo Kabushiki Kaisha)

The test methods in Examples and Comparative Examples shown in Table 1 are as follows. In Table 1 below, "-" indicates that the component is not included.

### <(1) Thermal conductivity>

A plate made of fluororesin was coated thereon with each of the thermally conductive resin compositions in Examples and Comparative Examples shown in Table 1 such that a thickness of a coated film was 0.5 mm, and the coated film was heated at 80°C for 1 hour to cure the composition and fabricate a test specimen. Thermal conductivity (W/(m·K)) for a cured surface (60 × 125 mm) of the test specimen was measured at 25°C by using a thermal conductometer (QTM-D3 manufactured by Kyoto Electronics Industry Co. Ltd., non-steady-state method). The results are shown in Table 1. The higher the thermal conductivity of the cured product, the more heat is transferred, which is preferred. In the present invention, from the viewpoint of thermal conductivity of the cured product, the thermal conductivity of the cured product is 0.23 W/(m·K) or higher. Particularly, in the present invention, the thermal conductivity of the cured product is preferably 0.25 W/(m·K) or higher from the viewpoint of thermal conductivity of the cured product. Comparison of the case where the lower limit described above is satisfied and the case where it is not satisfied indicates that there is a significant difference in the performance of dissipating heat generated from electrical and electronic components to the outside.

### <(2) Specific gravity of cured product>

A plate made of fluororesin was coated thereon with each of the thermally conductive resin compositions in Examples and Comparative Examples shown in Table 1 and the coated film was heated at 80°C for 1 hour to cure the thermally conductive resin composition and fabricate a test specimen. By using the aforementioned test specimen, the specific gravity of the test specimen was measured by the water displacement method in compliance with JIS K 0061 (2001). The results are shown in Table 1. In the present invention, the specific gravity is preferably 1.50 or less.

**[Table 1]**

| | Example 1 | Example 2 | Example 3 | Compar ative Example 1 | Compar ative Example 2 | Compar ative Example 3 | Compar ative Example 4 | Compar ative Example 5 |
|---|---|---|---|---|---|---|---|---|
| a1 | 80 | 80 | 80 | 80 | 80 | 80 | 80 | 80 |
| a2 | 20 | 20 | 20 | 20 | 20 | 20 | 20 | 20 |
| b1 | 25 | 25 | 25 | 25 | 25 | 25 | 25 | 25 |
| c1 | 45 | 30 | 10 | 90 | 80 | 60 | - | - |
| c'1 | - | - | - | - | - | - | - | 10 |
| d1 | 45 | 60 | 80 | - | 10 | 30 | 90 | 80 |
| Borate ester | 1 | 1 | 1 | 1 | 1 | 1 | 1 | 1 |
| Total | 216 | 216 | 216 | 216 | 216 | 216 | 216 | 216 |
| (1) Thermal conductivity (W/(m·K)) | 0.26 | 0.25 | 0.33 | 0.21 | 0.21 | 0.21 | 0.34 | 0.19 |
| (2) Specific gravity of the cured product | 1.14 | 1.28 | 1.43 | 0.83 | 0.87 | 1.01 | 1.72 | 0.99 |

From the results of Examples 1 to 3 shown in Table 1, the thermally conductive resin compositions of the present invention were confirmed to have both high thermal conductivity and low specific gravity.

Comparative Example 1 shown in Table 1 is the thermally conductive resin composition that does not contain the (D) component of the present invention, exhibiting the inferior thermal conductivity. Comparative Examples 2 and 3 resulted in inferior thermal conductivity. Moreover, Comparative Example 4 is the thermally conductive resin composition that does not contain the (C) component of the present invention, resulting in the high specific gravity. Also, Comparative Example 5 resulted in inferior thermal conductivity.

The present application is based on Japanese Patent Application No. 2021-132801 filed on August 17, 2021, and Japanese Patent Application No. 2022-103499 filed on June 28, 2022, the disclosed content of which is incorporated herein by reference in its entirety.

### Industrial applicability

The thermally conductive resin composition of the present invention is industrially useful since it has both a high thermal conductivity and a low specific gravity, rendering it applicable to a wide range of fields.

## Claims

1. A thermally conductive resin composition comprising the following (A) to (D) components:
(A) component: an epoxy resin,
(B) component: a latent curing agent,
(C) component: hollow inorganic powder, and
(D) component: non-hollow inorganic powder,
wherein a cured product thereof has a specific gravity of 1.50 or less and a thermal conductivity of 0.23 W/ (m·K) or higher.

2. The thermally conductive resin composition according to claim 1, comprising 3 to 55 parts by mass of the (C) component and 35 to 200 parts by mass of the (D) component, relative to 100 parts by mass of the (A) component.

3. The thermally conductive resin composition according to claim 1 or 2, wherein the (C) component is silica-alumina.

4. The thermally conductive resin composition according to any one of claims 1 to 3, wherein the (C) component has an apparent density of 0.2 to 2.5 g/cm³.

5. The thermally conductive resin composition according to any one of claims 1 to 4, wherein the (A) component comprises a glycidyl amine-type epoxy resin.

6. The thermally conductive resin composition according to any one of claims 1 to 5, wherein the (A) component comprises a bisphenol A-type epoxy resin and a bisphenol F-type epoxy resin.

7. The thermally conductive resin composition according to any one of claims 1 to 6, wherein the (B) component is an adduct-type latent curing agent.

8. The thermally conductive resin composition according to any one of claims 1 to 7, wherein the (B) component is an epoxy amine adduct-type latent curing agent.

9. The thermally conductive resin composition according to any one of claims 1 to 8, wherein the (A) component comprises a glycidyl amine-type epoxy resin and a epoxy resin without glycidyl amine.

10. The thermally conductive resin composition according to any one of claims 1 to 9, wherein the (A) component comprises a glycidyl amine-type epoxy resin and a epoxy resin without glycidyl amine, and a ratio of parts by mass of the glycidyl amine-type epoxy resin and the epoxy resin without glycidyl amine is 1:99 to 99:1.

11. The thermally conductive resin composition according to any one of claims 1 to 10, wherein an average particle size of the (C) component is 0.01 µm or larger and smaller than 100 µm.

12. The thermally conductive resin composition according to any one of claims 1 to 11, wherein the (D) component is at least one selected from the group consisting of alumina and aluminum nitride.

13. The thermally conductive resin composition according to any one of claims 1 to 12, wherein an average particle size of the (D) component is 0.01 µm or larger and smaller than 85 µm.

14. The thermally conductive resin composition according to any one of claims 1 to 13, wherein a density of the (D) component is within the range of higher than 2.5 g/cm³ and 7 g/cm³ or lower.

15. A cured product obtained by curing the thermally conductive resin composition according to any one of claims 1 to 14.
